Europäisches Patentamt

European Patent Office

Office européen des brevets

(11) Publication number: **0 170 335**
**B1**

# EUROPEAN PATENT SPECIFICATION

(45) Date of publication of patent specification: **19.10.88**

(51) Int. Cl.⁴: **B 60 R 19/18**

(21) Application number: **85201225.1**

(22) Date of filing: **23.07.85**

(54) **Bumper.**

(30) Priority: **24.07.84 NL 8402333**

(43) Date of publication of application:
**05.02.86 Bulletin 86/06**

(45) Publication of the grant of the patent:
**19.10.88 Bulletin 88/42**

(84) Designated Contracting States:
**BE DE FR GB IT NL SE**

(56) References cited:
**DE-A-2 331 450**
**DE-A-2 433 137**
**FR-A-1 336 323**
**FR-A-2 345 315**
**GB-A-2 084 942**
**US-A-4 072 334**

(73) Proprietor: **STAMICARBON B.V.**
**Mijnweg 1**
**NL-6167 AC Geleen (NL)**

(72) Inventor: **Beekman, Arie Willem**
**Margrietstraat 40**
**NL-6155 LB Puth-Schinnen (NL)**
Inventor: **van Dalen, Hendrik**
**Elisabethstraat 24**
**NL-6161 GT Geleen (NL)**

Courier Press, Leamington Spa, England.

## Description

The invention relates to a bumper comprising an oblong tubular plastic body as defined in the precharacterizing portion of claim 1.

Such a bumper is known from DE—A—2708856.

The production of bumpers from plastic has assumed large proportions in the past decade. The advantages offered by plastic compared with metal, as well as general information about plastic bumpers, are described, inter alia, in the magazine Plastverarbeiter 34, 1983, numbers 10 and 12, respectively pages 1128 and 1479.

The automotive industry imposes certain standards of attainment in respect of bumpers. Car bumpers are usually tested for their mechanical strength by means of a standardized test method, for instance ECE 42. Here it essentially concerns a collision test in which a bumper is subjected to a load between the suspension points and in which the bumper is then required under a certain load not to show any lasting deformation while no damage can be caused to the bodywork at a certain distance behind the bumper.

So far its design has been such that, in a collision, a bumper will 'breathe' as it is called, which means that its cross section perpendicular to its longitudinal direction will deform before possibly being bent completely. Here it is the intention for the bumper body already to absorb energy through the sectional deformation alone and, possibly, to bend through only after that. This kind of energy absorption can be further increased, as known in the art, by providing the cavity in the bumper with an energy-absorbing interior, such as foam, honeycomb blocks and ribs. Such systems are described in US—A—4072334 and DE—A—2,331,450.

It has been found that the plastic bumpers known so far require a fair amount of usually not inexpensive plastic in order that they may pass the standard test.

The invention aims at reducing the amount of plastic required for a plastic bumper complying with a standard test.

The invention is based on the insight that the standard specifications may be complied with also by consciously refraining from achieving energy absorption through sectional deformation and by having the energy absorption substantially achieved by exclusively the deflection of the whole bumper body while maintaining the original sectional shape.

The most effective embodiment of a bumper according to the insight underlying the invention can be obtained by providing the inner wall of the oblong hollow tubular body at intervals with ribs extending around the circumference of the tubular body, each rib being situated in a plane substantially perpendicular to the longitudinal axis of the bumper body.

In order to prevent the circumferential ribs from being buckled under the load, connecting ribs may be provided between the circumferential ribs.

Using a bumper designed according to the concept described, in which an optimum equilibrium can be employed between the amounts of wall and rib material through strength calculations known in the art, a substantial saving on materials can be achieved, or a much stronger bumper can be produced with the same amount of material.

The importance of the invention will be shown in the following embodiment according to the invention while referring to an embodiment of a bumper body represented in the drawing.

In the drawing

fig. 1 is a longitudinal section of a tubular bumper body according to the invention and

fig. 2 a cross section along line II—II in fig. 1.

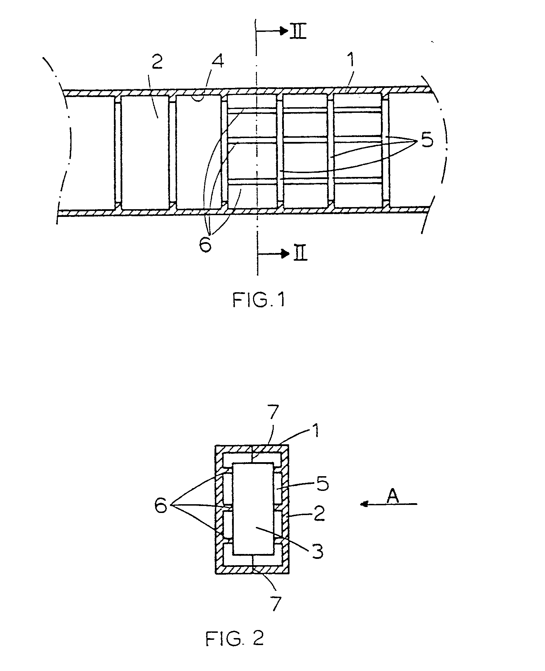

In figures 1 and 2 sections are shown of part of a hollow tubular bumper body which in this case has a rectangular section with short sides 1 and long sides 2. The bumper has a continuous cavity 3. On inner wall 4 there are circumferential ribs 5 in a plane perpendicular to the longitudinal axis of the body. These ribs 5 can be connected by ribs 6, which have been drawn in figure 2, for reasons of clearness, in a few places only.

The bumper body may be built up of two injection-moulded parts interconnected by means of weld 7 (fig. 2).

The figures only provide a diagrammatic representation of a tubular bumper body. The bumper body may have a bent longitudinal axis, while the cross section is usually not rectangular, but adjusted to the design of, for instance, the bodywork of a vehicle.

However, whatever the shape of the cross section may be, it is always possible to provide ribs 5, or a pattern of ribs as formed by, for instance, ribs 5 and 6. Even though the basic section is not optimal for preventing sectional deformation under load, by doing a strength calculation the chosen optimum wall thickness, rib thickness, rib distance and rib height may always be such as to prevent the sectional shape from being changed during the bending under the influence of the impact load according to the standard test and the rigidity from being adversely affected by it. The rigidity of a bumper, e.g., whose short sides bulge out under the influence of a force A in fig. 2 would decrease substantially, so that the resulting deflection would be too high and exceed a given maximum distance.

### Example

Experiment A:

A bumper body with rectangular cross section consisting of a plastic with an elastic modulus of 1200 has a wall thickness of 7 mm. The outside dimensions are 80 mm × 150 mm. The bumper body is secured to two suspension points situated 1000 mm apart on a freely movable vehicle placed in horizontal position and weighing 1000 kg. The tall side of the bumper body is in a vertical position. With an impact weight of 1000 kg at a rate of 4 km/h exerted between the suspension points it is found that the deflection is 60 mm.

Experiment B:

The experiment of Experiment A is repeated using a bumper body produced from the same plastic, but this time with a wall thickness of 4 mm and provided according to the invention with circumferential ribs.

The ribs are 4 mm thick and 16 mm high.

The ribs are placed at intervals of 50 mm.

Using this design a reduction in weight of about 20% has been achieved on the bumper of Experiment A. The deflection measured during the impact load is 60 mm.

Experiments A and B of the example show the importance of the invention. By abandoning the idea that the bumper body must first be compressed as a kind of cushion substantial economies can now be achieved on materials.

## Claims

1. Bumper comprising an oblong tubular plastic body, the inner wall of the tubular body having ribs placed at intervals, each rib being situated in a plane substantially perpendicular to the longitudinal axis of the tubular body, characterized in that the ribs extend around the circumference of the tubular body.

2. Bumper according to claim 1, characterized in that the circumferential ribs are connected by connecting ribs.

3. Plastic bumper according to claim 2, characterized in that the connecting ribs extend substantially into the direction of the longitudinal axis of the tubular body.

## Patentansprüche

1. Stoßdämpfer, umfassend einen länglichen, rohrförmigen Kunststoffkörper, wobei die Innenwand des rohrförmigen Körpers im Abstand voneinander angeordnete Rippen aufweist und jede Rippe in einer Ebene liegt, die im wesentlichen senkrecht zur Längsachse des rohrförmigen Körpers verläuft, dadurch gekennzeichnet, daß die Rippen sich um den Umfang des rohrförmigen Körpers erstrecken.

2. Stoßdämpfer nach Anspruch 1, dadurch gekennzeichnet, daß die Umfangsrippen durch Verbindungsrippen verbunden sind.

3. Kunststoffstoßdämpfer nach Anspruch 2, dadurch gekennzeichnet, daß die Verbindungsrippen sich im wesentlichen in Richtung der Längsachse des rohrförmigen Körpers erstrecken.

## Revendications

1. Pare-chocs comportant un corps allongé tubulaire en matière plastique, dont la paroi intérieure possède des nervures disposées à des intervalles et dont chacune est située dans un plan sensiblement perpendiculaire à l'axe longitudinal du corps tubulaire, caractérisé en ce que les nervures s'étendent autour de la circonférence du corps tubulaire.

2. Pare-chocs selon la revendication 1, caractérisé en ce que les nervures circonférentielles sont raccordées par des nervures de liaison.

3. Pare-chocs en matière plastique selon la revendication 2, caractérisé en ce que les nervures de liaison s'étendent sensiblement dans la direction de l'axe longitudinal du corps tubulaire.

FIG. 1

FIG. 2